# EUROPEAN PATENT SPECIFICATION

(11) **EP 2 119 528 B1**
(45) Date of publication and mention of the grant of the patent: **01.02.2012**
(21) Application number: 09160264.9
(22) Date of filing: 14.05.2009
(51) Int. Cl.: B23K 26/06

(54) **Laser processing apparatus**
Laserbearbeitungsvorrichtung
Appareil de traitement laser

(30) Priority: 15.05.2008 JP 2008127887
(43) Date of publication of application: 18.11.2009
(73) Proprietor: Mitutoyo Corporation, Kawasaki-shi, Kanagawa 213-8533 (JP)
(72) Inventor: Okabe, Kenji, Kanagawa 213-8533 (JP); Tanaka, Shoichi, Kanagawa 213-8533 (JP); Kurokawa, Masashi, Kanagawa 213-8533 (JP)
(74) Representative: Grünecker, Kinkeldey, Stockmair & Schwanhäusser

(56) References cited:
- EP-A1- 0 365 754
- JP-A- 7 066 204
- US-A- 5 166 493

## Description

Hitherto, as means for correcting a defect called as a white defect or a black defect which occurs in a photomask or a FPD (Flat Panel Display), a laser CVD (Chemical Vapor Deposition) method has been used to correct the white defect, and a laser repair method that removes an unnecessary residual defect with a laser beam has been used to correct the black defect.

Since, in many cases, wavelengths of the laser beams used for each of the aforementioned correction methods are different from each other, in a case that the aforementioned two types of defects are corrected, laser oscillators that emit laser beams having different wavelengths, and separate laser processing apparatuses including the respective laser oscillators have been used.

However, when both of the white defect and the black defect exist in the same sample, or when both defects need to be corrected, or the like, it is necessary to first mount the sample on one of the laser processing apparatuses for correcting the white defect, for example, then to mount the sample on the another laser processing apparatus for correcting the black defect. A heavy workload such as mounting the sample, adjusting a position, or the like, is involved, and has been one of causes to obstruct improvement of work efficiency. Further, as it is necessary to prepare the laser processing apparatuses for each type of defect corrections, respecting costs required for correcting the defects may not be disregarded.

Accordingly, it is desirable to have one laser processing apparatus provided with two laser oscillators irradiating laser beams of different wavelengths. For example, a laser film formation apparatus is provided with first and second laser beam irradiation means, and is capable of performing removal of film interconnection and a new film formation is well known (for example, refer to Japanese Unexamined Patent Application Publication No. H7-66204)

However, in the laser film formation apparatus described in the above-mentioned patent application, as first and second laser beams irradiated by the first and second laser beam irradiation means take different optical paths until reaching an objective lens disposed immediately before the sample, in designing the laser processing apparatus, a possibility of having unfavorable limitation, such as an increase of a size of the casing, or the like may exist. Further, slits have to be prepared for each of the optical paths and, therefore, in a case of performing a plurality of defect corrections requiring only a common slit, there has been a problem that the cost for the unnecessary slit may not be reduced.

In addition, since the laser beams having different wavelengths irradiated by the first and second laser beam irradiation means respectively pass through different positions of the same objective lens, a specialty that the objective lens has to be formed by using a thin film having high transmission property conforming to respective wave lengths at positions where each laser beams passes, is required. Therefore, manufacturing costs of the objective lens are concerned as well.

A problem solved by the present invention is to cause different types of laser processing to be performable by using a laser processing apparatus without requiring a special optical lens in an optical path of laser beams, to reduce the size of the laser processing apparatus, and to provide the apparatus at low cost.

A laser processing apparatus according to the present invention comprises the features defined in claim 1.

Thus, a laser processing apparatus is provided with first and second laser oscillators irradiating a first or a second laser beam wavelengths of the first and second laser beams being different from each other, and the laser processing apparatus is configured such that the first or second laser beam irradiated by switching either one of the first or second laser oscillators takes the same optical path as a path of the another laser beam by an optical path forming member, and reach a sample after passing the same slit, to perform laser processing on the sample. Accordingly, different types of laser processing may be performed using a common slit by one laser processing apparatus, and size and cost reduction of the laser processing apparatus may be achieved. Moreover, as the laser processing apparatus is configured to switch the objective lens to a objective lens with a predetermined magnification adapted for use at a laser wavelength of the first or second laser beam, the laser beam of either one of the first or second laser beam, may easily irradiate the sample by switching the objective lens to the objective lens with a different magnification without using a special optical system.

Therefore, the present invention causes one laser processing apparatus to be able to perform different types of laser processing without requiring a special optical system in the optical path of the laser beam, and reduces a size of the laser processing apparatus, and may provide the apparatus at lower cost.

In some embodiments, the first laser oscillator is adapted such that the first laser beam is suitable for laser CVD and the second laser oscillator is adapted such that the second laser beam is suitable for laser repair, for example for laser defect correction.

In some embodiments, the first laser oscillator is adapted such that the wavelength of the first laser beam is in the ultraviolet region and the second laser oscillator is adapted such that the wavelength of the second laser beam is in the infrared region.

In some embodiments, the laser processing apparatus comprises a first optical element, a second optical element and a measuring instrument. The first optical element is positionable in an optical path of the first laser beam to reflect the first laser beam, and is capable of being retracted to a position away from the optical path of the laser beam. The second optical element is positionable in the optical path of the second laser beam to reflect the second laser beam, and is capable of being retracted to a position away from the optical path of the second laser beam. The measuring instrument is adapted for obtaining the first laser beam reflected by the first optical element and the second laser beam reflected by the second optical element, and for checking an output state of the first laser oscillator and the second laser oscillator on the basis of the reflected beam.

In some embodiments, the measuring instrument comprises a power meter adapted for measuring an output power of the firs and the second laser beam.

In some embodiments, the laser processing apparatus comprises a movable section. The movable section comprises a first reflection section comprising the first optical element and a second reflection section comprising the second optical element. The movable section is movable in a direction that is perpendicular to the optical axis of the first laser beam and the optical axis of the second laser beam.

In some embodiments, the first optical element comprises a first and a second mirror positioned to reflect the first laser beam into a direction opposite the propagation direction of the first laser beam towards the measuring instrument, and the second optical element comprises a third and a fourth mirror adapted to reflect the second laser beam in a direction opposite the propagation direction of the second laser beam towards the measuring instrument.

In some embodiments, the observation section comprises a CCD camera.

In some embodiments, the optical path forming member comprises a mirror and a half-mirror, wherein the mirror is adapted to reflect one of the first and the second laser beam towards the half mirror and the half mirror is adapted to reflect at least a portion of one of the first and the second laser beam into the direction of the common optical axis and to transmit at least a portion of the other of the first and the second laser beam.

In some embodiments, the common optical axis and the optical axis of the other of the first and the second laser beam are concurrent.

In some embodiments, the half-mirror is a wavelength selective mirror adapted to reflect electromagnetic radiation having the wavelength of the one of the first and the second laser beam and to transmit the wavelength of the other of the first and the second laser beam.

In some embodiments, the slit comprises a first set of slit members provided opposite to each other and a second set of slit members opposite to each other, wherein the first set of slit members defines a slit width in a first direction and the second set of slit members defines a slit width in a second direction.

In some embodiments, at least one of a clearance between the first set of slit members and a clearance between second set of slit members is adjustable.

In some embodiments, the plurality of objective lenses are mounted at a predetermined interval along a direction perpendicular to the direction of the common optical axis, and the objective lens switch section is adapted to linearly drive the plurality of objective lenses into the direction perpendicular to the common optical axis.

In the following, embodiments of the present invention will be described with reference to the accompanying drawings, wherein:
Fig. 1 is a view illustrating a schematic configuration of a laser processing apparatus 1 with respect to the present invention, in which (A) is a front elevation, and (B) is a side elevation.
Fig. 2 is an enlarged view of main part illustrating a state where a laser beam for laser CVD, or for laser repair is irradiated to a movable section 24 of the laser processing apparatus 1 with respect to the present invention, in which (A) illustrates a state where the laser beam for laser CVD or the laser beam for laser repair is transmitted, (B) illustrates a state where the laser beam for laser repair is reflected, and (C) illustrates a state where the laser beam for laser CVD is reflected.
Fig. 3 is a block diagram of the laser processing apparatus 1 according to the present invention.

Hereinafter, a concrete mode of a laser processing apparatus with respect to the present invention is explained in detail with reference to drawings.

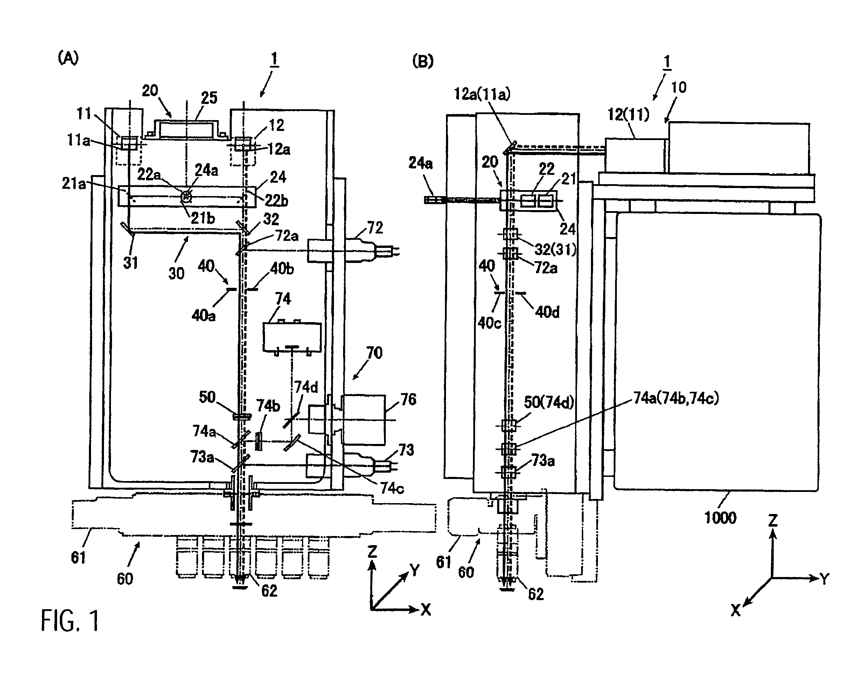

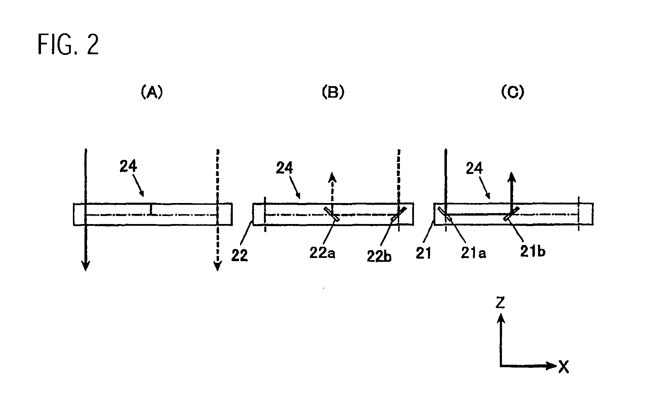

Fig. 1 illustrates a schematic configuration of a laser processing apparatus 1 according to the present invention, Fig. 1(A) is a front elevation, and Fig. 1(B) is a side elevation. Fig. 2 illustrates a state when a laser beam for the laser CVD or laser repair enters into a movable section 24 of the laser processing apparatus 1 according to the present invention. Fig. 2(A) is an enlarged view of main part illustrating a state in which the laser beam for the laser CVD or the laser beam for the laser repair is transmitted; Fig. 2(B) is an enlarged view of main part illustrating a state in which the laser beam for use in the laser repair is reflected; and Fig. 2(C) is an enlarged view of main part illustrating a state in which the laser beam for the laser CVD is reflected.

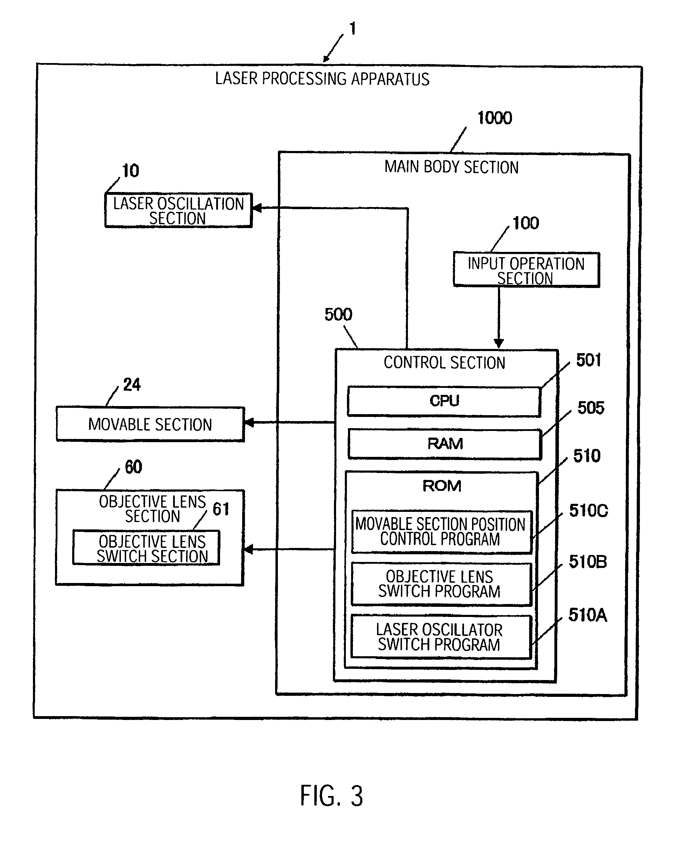

Fig. 3 is a block diagram of the laser processing apparatus 1 according to the present invention.

In the following explanation, a left and right direction of the laser processing apparatus 1 is indicated as an X-axis direction, a back and forth direction thereof is indicated as a Y-axis direction, and an up and down direction thereof is indicated as a Z-axis direction.

As illustrated in Fig. 1, the laser processing apparatus 1 is configured to include, for example, a laser oscillation section 10 for irradiating laser beam (first laser beam) for laser CVD and another laser beam (second laser beam) for laser repair, a measurement section 20 for checking an outputting state of the laser beam, an optical path forming section 30 for forming an optical path so that different types of laser beams irradiated from the laser oscillation section 10 can propagate along the same optical path, a slit 40 for limiting a reaching area of the laser beam to the sample, a tube lens 50 and an objective lens section 60 for focusing the laser beam onto the sample, an observation section 70 for observing the sample mounted on a stage (not shown) or a slit processing area of the sample, a main body section 1000 for performing various types of control processing of the laser processing apparatus 1, and so forth.

The laser oscillation section 10 is provided with a laser oscillator 11 for laser CVD as a first laser oscillator, a laser oscillator 12 for laser repair as a second laser oscillator, a mirror 11 a or 12a for leading the laser beam irradiated from the laser oscillator 11 for laser CVD or the laser oscillator 12 for laser repair to the optical path, and is configured to be able to switch the oscillator to operate either one of the laser oscillator 11 for laser CVD or the laser oscillator 12 for laser repair when a switch button of a later-described input operation section 100 is pressed down.

The laser oscillator 11 for the laser CVD functions as a laser beam source for emitting the laser beam for the laser CVD. Here, the laser beam for the laser CVD is used in the laser CVD method, wherein a desired thin film is accumulated in raw material gas by thermal decomposition or photolysis, and is a laser beam, of which a wavelength is in a ultraviolet region. A white defect occurring in a sample may be corrected by irradiating a sample such as a photomask, FPD, or the like with the laser beam.

A mirror 11a reflects a laser beam for laser CVD in a Y-axis direction (forward), to a Z-axis direction (downward), the laser beam being irradiated from the laser oscillator 11 for use in the laser CVD.

The laser oscillator 12 for the laser repair functions as a laser beam source for emitting the laser beam for laser repair. Here, the laser beam for the laser repair is used in the laser repair method, wherein a defect occurring in the sample is irradiated with a laser beam to remove the defect, and is a laser beam, the wavelength of which is in a range from a ultraviolet region to an infrared region. A black defect occurring in the sample may be corrected by irradiating the sample such as the photomask, FPD, or the like with the laser beam.

A mirror 12a reflects the laser beam for laser repair in the Y-axis direction (forward), to the Z-axis direction (downward), the laser beam being emitted by the laser oscillator 12 for use in the laser repair.

As illustrated in Fig. 1, the measurement section 20 includes a movable section 24 being movable in the Y-axis direction and reflecting either one of the laser beam for laser CVD or the laser beam for laser repair with a mirror provided at a predetermined position in the Y-axis direction, measuring instrument 25, and detects the laser beam output from the laser oscillator 11 for the laser CVD or the laser oscillator 12 for the laser repair to check the outputting state of the laser beam.

The movable section 24, as illustrated in Fig. 1 and Fig. 2(A), is a case formed with, for example, a glass substrate transmitting the laser beam, and is provided with a reflection section 21 for laser CVD, reflecting the laser beam for laser CVD, and a reflection section 22 for laser repair reflecting the laser beam for the laser repair, at a predetermined interval in the Y-axis direction inside thereof. The movable section 24 is configured such that driving force is applied to a shaft portion 24a extending to a front face (Y-axis, forward) direction of the laser processing apparatus 1 by a motor or the like(not shown), and the movable section 24 being movable in the Y-axis direction. Therefore, the position of the movable section 24 in the Y-axis direction is adjusted in response to pressing down of a switch button and/or a measuring button of an input operation section 100 described later, so that transmission/reflection of the laser beam for the laser CVD or the laser beam for the laser repair may be performed.

The movable section 24 may also be a part in which the position in the Y-axis direction may be manually adjusted.

A reflection section 22 for laser repair is provided with a second optical element mirrors 22a and 22b both mirrors reflecting the laser beam as illustrated in Fig. 2(B). The positions and angles of mirrors 22a and 22b are set such that when the position of the movable section 24 in the Y-axis direction is adjusted and the reflection section 22 for laser repair is disposed in the optical path, the laser beam irradiated toward the Z-axis direction (downward) by the laser oscillator 12 for laser repair is reflected to the X-axis direction (leftward) toward the mirror 22a by the mirror 22b, and the reflected beam is further reflected toward the Z-axis direction (upward) by the mirror 22a to enter into the measuring instrument 25.

The reflection section 21 for laser CVD is provided with the first optical element including mirrors 21 a and 21 b both mirrors reflecting the laser beam as illustrated in Fig. 2(C). The positions and angles of the mirror 21 a and the mirror 21 b are set such that when the position of the movable section 24 in the Y-axis direction is adjusted and the reflection section 21 for laser CVD is disposed in the optical path, the laser beam irradiated toward the Z-axis direction (downward) by the laser oscillator 11 for the laser CVD is reflected in the X-axis direction (rightward) toward the mirror 21b by the mirror 21 a, and the reflected beam from mirror 21 a is then reflected toward the Z-axis direction (upward) by the mirror 21 b to enter into the measuring instrument 25.

The measuring instrument 25 includes, for example, a power meter as a measuring instrument that measures an output of laser beam, and is able to detect the beam that is reflected by a reflection section 21 for laser CVD, or a reflection section 22 for laser repair, and check a state of the output of power of each of the laser beams irradiated by a laser oscillation section 10.

Further, the result of the output of laser power measured by the measuring instrument 25 is fed back to the laser oscillator 11 for laser CVD or the laser oscillator 12 for laser repair, and the laser oscillators 11 or 12 are automatically adjusted to output desired laser power.

An optical path-forming section 30 includes, for example, a mirror 31 and a half-mirror 32, as illustrated in Fig. 1.

The mirror 31 reflects the laser beam for laser CVD emitted by the laser oscillator 11 1 for laser CVD in a Z-axis direction (downward) toward an X-axis direction (rightward).

The half-mirror 32 reflects the laser beam for the laser CVD reflected by the mirror 31 toward the Z-axis direction (downward), and transmits the laser beam for laser repair emitted from the laser oscillator 12 for laser repair.

Accordingly, as the common optical path is formed such that any of the laser beams emitted from the laser oscillation section 10 take the same optical path before reaching a slit 40 by an optical path-forming section 30, different types of laser processing may be performed using the same slit 40.

As illustrated in Figs. 1(A) and 1(B), the slit 40 is disposed between the optical path-forming section 30 and a tube lens 50 in the optical path, and includes a set of slit members 40A and 40B and a set of slit members 40C and 40D both members in the sets being provided opposite to each other so that the laser beams may be controlled to be transmitted only through a clearance (slit-opening portion) formed by the slit members 40A through 40D.

Moreover, the slit members 40A and 40B form a variable slit capable of adjusting slit width in the X-axis direction. The user may adjust a processing area of a sample by adjusting the slit width to a predetermined value.

In some embodiments, there may be a system in which the slit width in the Y-axis direction formed by the slit members 40C and 40D is adjustable to a predetermined value, while the slit members 40A and 40B are located at fixed positions, the slit members 40C and 40D forming variable slit. There may be another system in which both of the slit widths in the X-axis direction and the Y-axis direction are adjusted, while height of the slit members 40A and 40B, and the slit members 40C and 40D respectively in the Z-axis direction are adjusted, all of the slit members 40A through 40D forming variable slits respectively.

The tube lens 50 directs the beam passed through the slit-opening portion of the slit 40 to the sample by being combined with an objective lens section 60 described later.

The objective lens section 60 is configured to include a plurality of objective lenses having different magnifications, and an objective lens switch section 61 on which the plurality of objective lenses are mounted in the X-axis direction at a predetermined interval, the objective lens switch section 61 linearly driving the plurality of objective lenses in the X-axis direction by being applied with driving force by, for example, a motor or the like. Accordingly, the objective lens section 60 is configured such that when a switch button of an input operation section 100 described later is pressed down and a laser beam emitted from a laser oscillator in the laser oscillation section 10 is switched, the objective lens switch section 61 is moved in the X-axis direction by a predetermined amount, and the objective lens is switched to an objective lens adapted for use at the laser wavelength of the laser beam emitted after the switching and having a predetermined magnification (for example, an objective lens 62), and the objective lens is disposed in the optical path to irradiate the sample with a slit-shaped laser beam.

Each of the objective lenses of the objective lens section 60 can be specifically adapted for use at the wavelength of the first laser beam emitted by the first laser oscillator 11, or for use at the wavelength of the second laser beam emitted by the second laser oscillator 12. For example, one or more first ones of the objective lenses, which are adapted for use at the wavelength of the first laser beam, can comprise a first type of antireflective coating that improves the transmittance of light having the wavelength of the first laser beam. One or more second ones of the objective lenses which are adapted for use at the wavelength of the second laser beam can comprise a second type of antireflective coating that improves the transmittance of light having the wavelength of the second laser beam. Properties of the antireflective coating can be controlled by selecting an appropriate material and an appropriate thickness of the antireflective coating.

Moreover, since the index of refraction of glass materials may be wavelength-dependent, the magnification of an objective lens can be wavelength-dependent. In some embodiments of the present invention, the one or more first objective lenses can be adapted such that the predetermined magnification is obtained at the wavelength of the first laser beam. The one or more second objective lenses can be adapted such that the predetermined magnification is obtained at the wavelength of the second laser beam. The magnification of the first and the second objective lenses can be controlled by selecting an appropriate curvature of optical elements of the objective lenses and/or by selecting an appropriate arrangement of the optical elements relative to each other.

In some embodiments, the objective lens switch section 61 may also be mounted with a plurality of objective lenses, having different magnifications, to switch manually the plurality of objective lenses.

An observation section 70 is configured to include a light source 72 for slit illumination; a half-mirror 72a for reflecting light that is emitted from the light source 72 for slit illumination in the X-axis direction (leftward), to an optical path direction (Z-axis direction, downward); a light source 73 for epi-illumination; a half-mirror 73a for reflecting light emitted by the light source 73 for epi-illumination in the X-axis direction (leftward) to the optical path direction (Z-axis direction, downward); a CCD camera 74 for observation and a CCD camera 76 for autofocus; a half-mirror 74a for obtaining reflection light for observation; a tube lens 74b; a mirror 74c; and a beam splitter 74d.

The light source 72 for slit illumination emits illumination light in a direction intersecting with the optical path (for example, X-axis direction, leftward), and the illumination light is reflected in the optical path direction (Z-axis direction, downward) by the half-mirror 72a provided on an optical path, and is irradiated to the sample through the tube lens 50 and the objective lens section 60, while being transmitted through the slit opening portion of the slit 40.

The light source 73 for epi-illumination emits the illumination light in a direction intersecting with the optical path (for example, X-axis direction, leftward), and the illumination light is reflected in the optical path direction by the half-mirror 73a provided on the optical path, and is irradiated to the sample through the tube lens 50 and the objective lens section 60.

The CCD camera 74 for observation and the CCD camera 76 for autofocus receive the illumination light of the light source 73 for the epi-illumination or the light source 72 for slit illumination, which is reflected by the sample, and perform projection for the sample and the area on the sample where the slit processing is performed, and focus adjustment, respectively.

That is, the illumination light of the light source 73 for epi-illumination or the light source 72 for slit illumination reflected by the sample becomes parallel light after passing through the objective lens 62 of the objective lens section 60, and is reflected to a direction intersecting with the optical path (X-axis direction, rightward) at the half-mirror 74a. Further the aforementioned parallel reflected light is intermediately imaged by the tube lens 74b, reflected in a direction in parallel with the optical path (Z-axis direction, upward) by the mirror 74c, divided into the light transmitted in a straight line manner by the beam splitter 74d and the light reflected in the direction intersecting with the optical path, and are received by the CCD camera 74 for observation, and the CCD camera 76 for autofocus.

Therefore, by receiving the reflected light of the illumination light irradiated to the sample from the light source 72 for slit illumination and the light source 73 for epi-illumination, a user may accurately observe the sample and the area on the sample where the laser processing is performed via the CCD camera 74 for observation, and focusing can be performed by means of the CCD camera 76 for autofocus.

Accordingly, the area for which the laser processing is performed (slit width) may be adjusted by adjusting the slit 40 in advance, while visually confirming with the CCD camera 74 for observation, and therefore accurate correction for a white defect and a black defect may be performed.

A main body section 1000 is provided with the input operation section 100 and a control section 500 as illustrated in Fig. 3, and performs an entire control operation for the laser processing apparatus 1.

The input operation section 100 is configured to include, for example, a switch button (not shown) for switching on the laser oscillator 11 for laser CVD or the laser oscillator 12 for laser repair of the laser oscillation section 10, a measuring button (not shown) for measuring the laser beam for laser CVD or the laser beam for laser repair, and so forth. When the above button is pressed down by a user, the input operation section 100 outputs a predetermined press-down signal to the control section 500.

The control section 500 is configured to include a CPU 501, a RAM 505, and a ROM 510, and is connected to the laser oscillation section 10, the objective lens section 60, and the movable section 24. The control section 500 performs a control operation for each section in response to the predetermined press-down signal output from the input operation section 100.

The CPU 501 executes various processing programs stored in the ROM 510, and stores processing data in the RAM 505.

The RAM 505 includes a program storage area for storing the processing program or the like executed by the CPU 501, and a data storage area for storing the data such as a processed result of the like, generated when the input data or the aforementioned processing program is executed.

The ROM 510 stores, for example, various processing programs such as a laser oscillator switch program 510A, an objective lens switch program 510B, a movable section position control program 510C, and so forth, all of which are executed by the CPU 501.

The laser oscillator switch program 510A executes control for switching the laser oscillators (laser oscillator 11 for a laser CVD or laser oscillator 12 for laser repair) to be used in response to the press-down signal of the switch button of the input operation section 100.

That is, when a user presses down the switch button of the input operation section 100, the CPU 501 executes the laser oscillator switch program 510A, and transmits an output signal to switch on either the laser oscillator 11 for the laser CVD or the laser oscillator 12 for the laser repair to the laser oscillation section 10, and the laser oscillator in an outgoing state is switched on by the laser oscillation section 10. Therefore, the laser beam with which the sample is irradiated may be switched on in accordance with the processing content of the user.

The objective lens switch program 510B executes a control operation for switching the objective lens of the objective lens section 60 to be used in response to the press-down signal of the switch button of the input operation section 100.

That is, when a user presses down the switch button of the input operation section 100, the CPU 501 executes the laser oscillator switch program 510A and either the laser oscillator 11 for laser CVD or the laser oscillator 12 for laser repair is switched on. Further, the CPU 501 executes the objective lens switch program 510B and thereby the objective lens switch section 61 is driven in response to the laser wavelength of the laser beam irradiated from the switched laser oscillator, and the objective lens may be switched to the objective lens having the predetermined magnification. Thus, even when any one of the laser beams is irradiated from the laser oscillation section 10, the sample may be irradiated with the appropriate laser beam .

The movable section position control program 510C adjusts and controls a position of the movable section 24 in the Y-axis direction in response to the press-down signal of the switch button or the measuring button of the input operation section 100.

That is, when a user presses down the switch button of the input operation section 100, the CPU 501 executes the movable section position control program 510C, drives a shaft portion 24a by a predetermined amount and adjusts the position of the movable section 24 in the Y-axis direction such that the reflection section 21 for the laser CVD and the reflection section 22 for the laser repair are not disposed in the optical path, and controls the position of the movable section 24 such that the laser beam is transmitted and the sample is irradiated with the laser beam when the laser beam is emitted from one of the oscillators of the laser oscillation section 10. On the other hand, the movable section position control program 510C is configured such that when a user presses down the measuring button of the input operation section 100, the CPU 501 executes the movable section position control program 510C, drives the shaft portion 24a by a predetermined amount, and disposes one of the reflection section 21 for laser CVD and the reflection section 22 for laser repair in the optical path in accordance with a type of the laser beam emitted from the laser oscillation section 10 and thereby the reflected beam may be detected by the measuring instrument 25.

Next, a switch operation for the laser beam irradiated from the laser oscillation section 10 and processing for checking an output state of the laser beam are described.

First, when the switch button of the input operation section 100 is pressed down, the CPU 501 executes the laser oscillator switch program 510A, and switches on either the laser oscillator 11 for the laser CVD or the laser oscillator 12 for the laser repair of the laser oscillation section 10. Further, simultaneously, CPU 501 executes the objective lens switch program 510B and the objective lens switch section 61 moves in the X axis direction by a predetermined amount so that an objective lens having a magnification appropriate for the laser beam that is emitted after the aforementioned switch operation is performed is disposed in the optical path. Then, the CPU 501 executes the movable section position control program 510C and drives the shaft portion 24a by a predetermined amount, and thereby the position of the movable section 24 in the Y-axis direction is adjusted so that the reflection section 21 for the laser CVD and the reflection section 22 for the laser repair is not disposed in the optical path, and the emitted laser beam is transmitted. As described above, as the sample is irradiated with the laser beam emitted from the switched laser oscillator , the laser processing according to the processing content of the user may be performed.

Next, in this state, when the measuring button of the input operation section 100 is pressed down, the CPU 501 executes movable section position control program 510C, and drives the shaft portion 24a by a predetermined amount, and the position of the movable section 24 in the Y-axis direction is adjusted so that either the reflection section 21 for laser CVD or the reflection section 22 for laser repair is disposed in the optical path in accordance the type of laser beam emitted from the laser oscillation section 10. Thus, the reflected beam may be detected by the measuring instrument 25 and the output state of the laser power may be checked.

As described above, in the laser processing apparatus 1 according to the present invention, the laser oscillation section 10 is provided with the laser oscillator 11 for laser CVD and the laser oscillator 12 for laser repair, and the laser beam emitted after switching the oscillator to either one of the oscillators by the laser oscillator switch program 510A performs the laser processing when it reaches the sample after passage through the same slit 40 the optical path-forming section 30. Accordingly, different types of laser processing may be performed by one laser processing apparatus 1 using a common slit 40, and size and cost reduction of the laser processing apparatus 1 may be achieved. Further, since the objective lens of the objective lens section 60 is configured to be switched to an objective lens having a predetermined magnification and being adapted for use at a wavelength of the laser beam emitted from the laser oscillation section 10 by the objective lens switch section 61, the laser beam may easily be used for irradiation by switching to the objective lens having a different magnification even without using a particular optical system, and even when any one of the laser beams irradiated from the laser oscillation section 10 is used.

Furthermore, in the laser oscillation section 10, the laser oscillator 11 for laser CVD and the laser oscillator 12 for laser repair are provided, and the sample can be irradiated with the laser beam for laser CVD or the laser beam for laser repair.

Accordingly, as the laser processing by the laser CVD method and the laser processing by the laser repair method may be performed by the same laser processing apparatus 1, for example, when both of a white defect and a black defect occur in the same sample, it is not necessary to mount the sample on the laser processing apparatus for white defect correction and then to mount the same sample on the laser processing apparatus for black defect correction again. This improves work efficiency, and since one laser processing apparatus may be eliminated, costs required for correcting the defect may be reduced to a large extent.

Moreover, in the laser processing apparatus 1, the movable section 24 that can switch and arrange the reflection section 21 for laser CVD including the mirrors 21 a and 21 b, or the reflection section 22 for laser repair including the mirrors 22a and 22b in the optical path as well as the measuring section 20 capable of receiving the laser beam reflected by the reflection section 21 for laser CVD or the reflection section 22 for laser repair, and of measuring the output of the laser beam are provided, and an output state of the laser beam irradiated from the laser oscillator 11 for the laser CVD or the laser oscillator 12 for the laser repair can be checked.

Accordingly, since the output state of laser power of the laser beam output from the laser oscillator 11 for laser CVD or the laser oscillator 12 for laser repair may be easily checked, the work efficiency of the laser processing apparatus 1 at a time of problem or during a maintenance/inspection period, is improved.

Further, in the laser processing apparatus 1, the light source 72 for slit illumination irradiating the slit 40 with light, and the observation section 70 observing the light that is emitted from the light source 72 for slit illumination, transmitted through the slit 40, and reflected by the sample surface, by means of the CCD camera 74 for observation or the CCD camera 76 for autofocus are provided.

Accordingly, a user may perform accurate laser processing by observing in advance an area in the sample where the laser processing is to be performed and adjusting slit width of the slit 40 to a predetermined value.

The objective lens switch section 61 with respect to the present invention is only required to be adapted to be mounted with a plurality of objective lenses, and to be adapted to arrange a predetermined objective lens in an optical path after switching the objective lens. For example, a rotary revolver method, or the like may also be applicable.

Furthermore, the first and second laser oscillators with respect to the present invention are not limited to the laser oscillator for laser CVD and the laser oscillator for laser repair, and other oscillators each irradiating a laser beam for laser processing may also be applicable.

According to an embodiment, the present invention relates to a laser processing apparatus for processing a sample by irradiating a laser beam including: a first laser oscillator and a second laser oscillator respectively irradiating a first laser beam or a second laser beam, wavelengths of the first and second laser beams being different to each other; switch means for switching the first laser oscillator or the second laser oscillator so that either one of the first laser beam or the second laser beam is irradiated; a slit provided in an optical path for leading either one of the first laser beam or the second laser beam irradiated from the first laser oscillator or the second laser oscillator, respectively, to the sample, the first laser oscillator or the second laser oscillator having been switched by the switch means; an optical path forming member disposed such that the first laser beam or the second laser beam irradiated from the first laser oscillator or the second laser oscillator respectively passes through the slit; and objective lens switch means for switching objective lenses disposed between the slit and the sample in the optical path to a lens with a predetermined magnification corresponding to the laser wavelength of the first laser beam or the second laser beam.

According to some embodiments, the present invention relates to the laser processing apparatus described in the preceding paragraph, wherein the first laser beam is a laser beam for laser CVD, and the second laser beam is a laser beam for laser repair.

According to some embodiments, the present invention relates to the laser processing apparatus described in any of the two preceding paragraphs, including: a first optical element which is positioned in the optical path of the first laser beam to reflect the first laser beam, and is capable of being retracted to a position away from the optical path of the first laser beam; a second optical element which is positioned in the optical path of the second laser beam to reflect the second laser beam, and is capable of being retracted to a position away from the optical path of the second laser beam; the laser processing apparatus further including: the reflected beam obtainment means for obtaining the reflected beam of the first laser beam or the second laser beam respectively the reflected beams being reflected by the first optical element or the second optical element both of which are disposed in the optical path corresponding to a type of the laser beam irradiated from the first laser oscillator or the second oscillator, the oscillators being switched by the switch means; and output state check means for checking an output state of the first laser oscillator or the second laser oscillator on the basis of the reflected beam obtained by the reflected beam obtainment means. The present invention relates to the laser processing apparatus according to any one of the preceding three paragraphs, including: a light source for irradiating light to the slit, the light conforming to a beam axis of the laser beam; and an observation section for observing the light, the light being irradiated from the beam source, transmitted through the slit, and reflected from a sample surface.

### Reference Numerals:

1: laser processing apparatus
10: laser oscillation section (switch means)
11: laser oscillator for the laser CVD (first laser oscillator)
12: laser oscillator for the laser repair (second laser oscillator)
20: measurement section
21 a, 21 b: first optical elements
22a, 22b: second optical element
24: movable section (reflected beam-obtaining means)
25: measuring instrument (output state check means)
30: optical path forming section
31: mirror (optical path forming member)
32: half-mirror (optical path forming member)
40: slit
60: objective lens section
61: objective lens switch section (objective lens switch means)
62: objective lens
70: observation section
72: slit illumination (light source)
500: control section
501: CPU (switch means, objective lens switch means, reflected beam acquiring means)
510: ROM
510A: laser oscillator-switching program (switch means)
510B: objective lens switch program (objective lens switch means)
510C: movable section position control program (reflected beam-acquiring means)

## Claims

1. A laser processing apparatus (1) for processing a sample provided on a sample stage by irradiating the sample with a laser beam comprising:
a first laser oscillator (11) adapted for emitting a first laser beam and a second laser oscillator (12) adapted for emitting a second laser beam, wavelengths of the first and second laser beams being different from each other;
switch means (510a) adapted for alternatively switching on the first laser oscillator (11) and the second laser oscillator (12) so that either the first laser beam or the second laser beam is emitted; and the apparatus being **characterized by**
an optical path forming section (30) adapted such that the first laser beam emitted from the first laser oscillator (11) and the second laser beam emitted from the second laser oscillator (12) propagate along a common optical path downstream of the optical path forming section (30);
a slit (40) provided in said common optical path between said optical path forming section (30) and said sample stage;
an objective lens switch section adapted for alternatively moving a plurality of objective lenses (62) to a position in said common optical path between said slit (40) and said sample stage, each of said objective lenses (62) having a predetermined magnification and being adapted for use at the wavelength of the first laser beam or for use at the wavelength of the second laser beam;
a light source (72) adapted for irradiating the slit (40) with light, the light propagating along a beam axis of the laser beam; and
an observation section (70) adapted for observing the light emitted from the light source (72) after transmission through the slit (40) and reflection from the surface of a sample provided in the sample stage.

2. The laser processing apparatus (1) according to Claim 1, wherein the first laser oscillator (11) is adapted such that the first laser beam is suitable for laser CVD, and the second laser oscillator (12) is adapted such that the second laser beam is suitable for laser repair.

3. The laser processing apparatus (1) according to claim 1 or claim 2, wherein the first laser oscillator (11) is adapted such that the wavelength of the first laser beam is in the ultraviolet region and the second laser oscillator (12) is adapted such that the wavelength of the second laser beam is in the infrared region.

4. The laser processing apparatus (1) according to any of claims 1 to 3, comprising:
a first optical element which is positionable in an optical path of the first laser beam to reflect the first laser beam, and is capable of being retracted to a position away from the optical path of the first laser beam; and
a second optical element which is positionable in the optical path of the second laser beam to reflect the second laser beam, and is capable of being retracted to a position away from the optical path of the second laser beam;
the laser processing apparatus further including: a measuring instrument (25) for receiving the first laser beam reflected by the first optical element and the second laser beam reflected by the second optical element and for checking an output state of the first laser oscillator (11) and the second laser oscillator (12) on the basis of the reflected beam received by the measuring instrument (25).

5. The laser processing apparatus (1) according to claim 4, wherein the measuring instrument (25) comprises a power meter adapted for measuring an output power of the first and the second laser oscillators (11, 12).

6. The laser processing apparatus (1) according to claim 4 or claim 5, comprising a movable section (24), the movable section (24) comprising a first reflection section (21) comprising the first optical element and a second reflection section (22) comprising the second optical element, wherein the movable section (24) is movable in a direction that is perpendicular to the optical axis of the first laser beam and the optical axis of the second laser beam.

7. The laser processing apparatus (1) according to claim 6, wherein the first optical element comprises a first (21 a) and a second (21 b) mirror positioned to reflect the first laser beam into a direction opposite the propagation direction of the first laser beam towards the measuring instrument (25); and
wherein the second optical element comprises a third (22a) and a fourth (22b) mirror adapted to reflect the second laser beam in a direction opposite the propagation direction of the second laser beam towards the measuring instrument (25).

8. The laser processing apparatus (1) according to claim 1, wherein the observation section (70) comprises a CCD camera (74).

9. A laser processing apparatus (1) according to any of the preceding claims, wherein the optical path forming member (30) comprises a mirror (31) and a half-mirror (32),
wherein the mirror (31) is adapted to reflect one of the first and the second laser beam towards the half mirror (32); and
wherein the half mirror (32) is adapted to reflect at least a portion of the one of the first and the second laser beam into the direction of the common optical axis and to transmit at least a portion of the other of the first and the second laser beam.

10. A laser processing apparatus (1) according to claim 9, wherein the common optical axis and the optical axis of the other of the first and the second laser beam are concurrent.

11. A laser processing apparatus (1) according to claim 9 or 10, wherein the half-mirror (32) is a wavelength selective mirror adapted to reflect electromagnetic radiation having the wavelength of the one of the first and the second laser beam and to transmit the wavelength of the other of the first and the second laser beam.

12. A laser processing apparatus (1) according to any of the preceding claims, wherein the slit (40) comprises a first set of slit members (40A, 40B) provided opposite to each other and a second set of slit members (40C, 40D) provided opposite to each other, wherein the first set of slit members (40A, 40B) defines a slit width in a first direction and the second set of slit members (40C, 40D) defines a slit width in a second direction.

13. A laser processing apparatus (1) according to claim 12, wherein at least one of a clearance between the first set of slit members (40A, 40B) and a clearance between the second set of slit members (40C, 40D) is adjustable.

14. A laser processing apparatus (1) according to any of the preceding claims, wherein the plurality of objective lenses (62) are mounted at a predetermined interval along a direction perpendicular to the direction of the common optical axis, and wherein the objective lens switch section (61) is adapted to linearly drive the plurality of objective lenses (62) into said direction.

## Patentansprüche

1. Laserbearbeitungsvorrichtung (1) zum Bearbeiten einer Probe, die auf einem Probentisch vorhanden ist, durch Bestrahlen der Probe mit einem Laserstrahl, wobei die Vorrichtung umfasst:
einen ersten Laseroszillator (11), der so eingerichtet ist, dass er einen ersten Laserstrahl emittiert, und einen zweiten Laseroszillator (12), der so eingerichtet ist, dass er einen zweiten Laserstrahl emittiert, wobei sich die Wellenlängen des ersten und des zweiten Laserstrahls voneinander unterscheiden:
eine Umschalteinrichtung (510a), die so eingerichtet ist, dass sie abwechselnd auf den ersten Laseroszillator (11) und den zweiten Laseroszillator (12) umschaltet, so dass entweder der erste Laserstrahl oder der zweite Laserstrahl emittiert wird; und wobei die Vorrichtung **gekennzeichnet ist durch**:
einen Lichtweg-Formungsabschnitt (30), der so eingerichtet ist, dass sich der von dem ersten Laseroszillator (11) emittierte erste Laserstrahl und der von dem zweiten Laseroszillator (12) emittierte zweite Laserstrahl auf einem gemeinsamen, dem Lichtweg-Formungsabschnitt (30) nachgelagerten Lichtweg ausbreiten;
einen Schlitz (40), der auf dem gemeinsamen Lichtweg zwischen dem Lichtweg-Formungsabschnitt (30) und dem Probentisch vorhanden ist;
einen Objektivlinsen-Umschaltabschnitt, der so eingerichtet ist, dass er eine Vielzahl von Objektivlinsen (62) abwechselnd an eine Position auf dem gemeinsamen Lichtweg zwischen dem Schlitz (40) und dem Probentisch bewegt, wobei jede der Objektivlinsen (62) eine vorgegebene Vergrößerung hat und zum Einsatz bei der Wellenlänge des ersten Laserstrahls oder zum Einsatz bei der Wellenlänge des zweiten Laserstrahls eingerichtet ist;
eine Lichtquelle (72), die so eingerichtet ist, dass sie den Schlitz (40) mit Licht bestrahlt, wobei sich das Licht entlang einer Strahlachse des Laserstrahls ausbreitet; und
einen Beobachtungsabschnitt (70), der zum Beobachten des von der Lichtquelle (72) emittierten Lichtes nach Durchgang **durch** den Schlitz (40) und Reflektion von der Oberfläche einer auf dem Probentisch vorhandenen Probe eingerichtet ist.

2. Laserbearbeitungsvorrichtung (1) nach Anspruch 1, wobei der erste Laseroszillator (11) so eingerichtet ist, dass der erste Laserstrahl für Laser-CVD geeignet ist, und der zweite Laseroszillator (12) so eingerichtet ist, dass der zweite Laserstrahl für Laser-Reparatur geeignet ist.

3. Laserbearbeitungsvorrichtung (1) nach Anspruch 1 oder Anspruch 2, wobei der erste Laseroszillator (11) so eingerichtet ist, dass die Wellenlänge des ersten Laserstrahls im Ultraviolett-Bereich liegt, und der zweite Laseroszillator (12) so eingerichtet ist, dass die Wellenlänge des zweiten Laserstrahls im Infrarot-Bereich liegt.

4. Laserbearbeitungsvorrichtung (1) nach einem der Ansprüche 1 bis 3, die des Weiteren umfasst:
ein erstes optisches Element, das auf einem Lichtweg des ersten Laserstrahls positioniert werden kann, um den ersten Laserstrahl zu reflektieren, und das an eine Position eingezogen werden kann, an der es von dem Lichtweg des ersten Laserstrahls entfernt ist; und
ein zweites optisches Element, das auf dem Lichtweg des zweiten Laserstrahls positioniert werden kann, um den zweiten Laserstrahl zu reflektieren, und das an eine Position eingezogen werden kann, an der es von dem Lichtweg des zweiten Laserstrahls entfernt ist;
wobei die Laserbearbeitungsvorrichtung des Weiteren enthält:
ein Messinstrument (25), das den durch das erste optische Element reflektierten ersten Laserstrahl und den durch das zweite optische Element reflektierten zweiten Laserstrahl empfängt und einen Ausgangszustand des ersten Laseroszillators (11) sowie des zweiten Laseroszillators (12) auf Basis des durch das Messinstrument (25) empfangenen reflektierten Strahls prüft.

5. Laserbearbeitungsvorrichtung (1) nach Anspruch 4, wobei das Messinstrument (25) einen Leistungsmesser umfasst, der zum Messen einer Ausgangsleistung des ersten und des zweiten Laseroszillators (11, 12) eingerichtet ist.

6. Laserbearbeitungsvorrichtung (1) nach Anspruch 4 oder Anspruch 5, die einen beweglichen Abschnitt (24) umfasst, wobei der bewegliche Abschnitt (24) einen ersten Reflexionsabschnitt (21), der das erste optische Element umfasst, und einen zweiten Reflexionsabschnitt (22) umfasst, der das zweite optische Element umfasst, und der bewegliche Abschnitt (24) in einer Richtung bewegt werden kann, die senkrecht zu der optischen Achse des ersten Laserstrahls sowie der optischen Achse des zweiten Laserstrahls ist.

7. Laserbearbeitungsvorrichtung (1) nach Anspruch 6, wobei das erste optische Element einen ersten (21 a) und einen zweiten (21 b) Spiegel umfasst, die so positioniert sind, dass sie den ersten Laserstrahl in einer Richtung entgegengesetzt zur Ausbreitungsrichtung des ersten Laserstrahls auf das Messinstrument (25) zu reflektieren; und
das zweite optische Element einen dritten (22a) und einen vierten (22b) Spiegel umfasst, die so eingerichtet sind, dass sie den zweiten Laserstrahl in eine Richtung entgegengesetzt zu der Ausbreitungsrichtung des zweiten Laserstrahls auf das Messinstrument (25) zu reflektieren.

8. Laserbearbeitungsvorrichtung (1) nach Anspruch 1, wobei der Beobachtungsabschnitt (70) eine CCD-Kamera (74) umfasst.

9. Laserbearbeitungsvorrichtung (1) nach einem der vorangehenden Ansprüche, wobei das Lichtweg-Formungselement (30) einen Spiegel (31) und einen halbdurchlässigen Spiegel (32) umfasst,
wobei der Spiegel (31) so eingerichtet ist, dass er den ersten oder den zweiten Laserstrahl auf den halbdurchlässigen Spiegel (32) zu reflektiert; und
der halbdurchlässige Spiegel (32) so eingerichtet ist, dass er wenigstens einen Teil von dem ersten oder dem zweiten Laserstrahl in die Richtung der gemeinsamen optischen Achse reflektiert und wenigstens einen Teil des anderen von dem ersten und dem zweiten Laserstrahl durchlässt.

10. Laserbearbeitungsvorrichtung (1) nach Anspruch 9, wobei die gemeinsame optische Achse und die optische Achse des anderen von dem ersten und dem zweiten Laserstrahl deckungsgleich sind.

11. Laserbearbeitungsvorrichtung (1) nach Anspruch 9 oder 10, wobei der halbdurchlässige Spiegel (32) ein wellenlängenselektiver Spiegel ist, der so eingerichtet ist, dass er elektromagnetische Strahlung reflektiert, die die Wellenlänge des einen von dem ersten und dem zweiten Laserstrahl hat, und die Wellenlänge des anderen von dem ersten und dem zweiten Laserstrahl durchlässt.

12. Laserbearbeitungsvorrichtung (1) nach einem der vorangehenden Ansprüche, wobei der Schlitz (40) eine erste Gruppe von Schlitzelementen (40A, 40B), die einander gegenüberliegend vorhanden sind, sowie eine zweite Gruppe von Schlitzelementen (40C, 40D) umfasst, die einander gegenüberliegend vorhanden sind, und die erste Gruppe von Schlitzelementen (40A, 40B) eine Schlitzbreite in einer ersten Richtung bildet und die zweite Gruppe von Schlitzelementen (40C, 40D) eine Schlitzbreite in einer zweiten Richtung bildet.

13. Laserbearbeitungsvorrichtung (1) nach Anspruch 12, wobei ein Abstand zwischen den Schlitzelementen (40A, 40B) der ersten Gruppe oder/und ein Abstand zwischen den Schlitzelementen (40C, 40D) der zweiten Gruppe verstellt werden kann/können.

14. Laserbearbeitungsvorrichtung (1) nach einem der vorangehenden Ansprüche, wobei die Vielzahl von Objektivlinsen (62) in einem vorgegebenen Intervall in einer Richtung senkrecht zur Richtung der gemeinsamen optischen Achse angebracht sind und der Objektivlinsen-Umschaltabschnitt (61) so eingerichtet ist, dass er die Vielzahl von Objektivlinsen (62) linear in die Richtung steuert.

## Revendications

1. Appareil de traitement au laser (1) pour le traitement d'un échantillon prévu sur une platine pour échantillon par exposition de l'échantillon à un faisceau laser, appareil comprenant :
un premier oscillateur (11) adapté pour émettre un premier faisceau laser et un second oscillateur laser (12) adapté pour émettre un second faisceau laser, les longueurs d'onde des premier et second faisceaux lasers étant différentes les unes des autres ;
un moyen de commutation (510a) adapté pour une commutation en alternance vers le premier oscillateur laser (11) et vers le second oscillateur laser (12) de sorte que soit le premier faisceau laser soit le second faisceau laser soit émis ; et l'appareil étant **caractérisé par** :
une section de formation de chemin optique (30) adaptée pour que le premier faisceau laser émis par le premier oscillateur laser (11) et le second faisceau laser émis par le second oscillateur laser (12) se propagent le long d'un chemin optique commun en aval de la section de formation de chemin optique (30) ;
une fente (40) prévue dans ledit chemin optique commun entre ladite section de formation de chemin optique (30) et ladite platine pour échantillon ;
une section de commutation de lentille de focalisation adaptée pour déplacer en alternance une pluralité de lentilles de focalisation (62) jusqu'à une position située dans ledit chemin optique commun entre ladite fente (40) et ladite platine pour échantillon, chacune desdites lentilles de focalisation (62) comprenant une amplitude prédéfinie et étant adaptée pour être utilisée à la longueur d'onde du premier faisceau laser ou à la longueur d'onde du second faisceau laser ;
une source lumineuse (72) adaptée pour une exposition de la fente (40) à de la lumière, celle-ci se propageant le long d'un axe de faisceau du faisceau laser ; et
une section d'observation (70) adaptée pour observer la lumière émise par la source de lumière (72) après sa transmission par la fente (40) et sa réflexion à partir de la surface d'un échantillon prévu dans la platine pour échantillon.

2. Appareil de traitement au laser (1) conformément à la revendication 1, dans lequel le premier oscillateur laser (11) est adapté pour que le premier faisceau laser soit approprié pour un dépôt chimique en phase vapeur (CVD) assisté par laser, et le second oscillateur (12) est adapté pour que le second faisceau laser soit approprié pour la réparation au laser.

3. Appareil de traitement au laser (1) conformément à la revendication 1 ou à la revendication 2, dans lequel le premier oscillateur laser (11) est adapté pour que la longueur d'onde du premier faisceau laser soit dans la zone de rayonnement ultraviolet et le second oscillateur laser (12) est adapté pour que la longueur d'onde du second faisceau laser soit dans la zone infrarouge.

4. Appareil de traitement au laser (1) conformément à l'une quelconque des revendications 1 à 3, comprenant :
un premier élément optique qui peut être positionné dans un chemin optique du premier faisceau laser afin de réfléchir le premier faisceau laser, et est capable d'être rétracté jusqu'à une position éloignée du chemin optique du premier faisceau laser ; et
un second élément optique qui peut être positionné dans le chemin optique du second faisceau laser afin de réfléchir le second faisceau laser, et est capable d'être rétracté jusqu'à une position éloignée du chemin optique du second faisceau laser ;
l'appareil de traitement au laser comprend en outre un instrument de mesure (25) pour recevoir le premier faisceau laser réfléchi par le premier élément optique et le second faisceau laser réfléchi par le second élément optique et pour vérifier un état de sortie du premier oscillateur laser (11) et du second oscillateur laser (12) sur la base du faisceau réfléchi reçu par l'instrument de mesure (25).

5. Appareil de traitement au laser (1) conformément à la revendication 4, dans lequel l'instrument de mesure (25) comprend un mesureur de puissance adapté pour mesurer une puissance de sortie des premier et second oscillateurs laser (11, 12).

6. Appareil de traitement au laser (1) conformément à la revendication 4 ou à la revendication 5, comprenant une section mobile (24), ladite section (24) comprenant une première section de réflexion (21) comprenant le premier élément optique et une seconde section de réflexion (22) comprenant le second élément optique, la section mobile (24) étant mobile dans une direction qui est perpendiculaire à l'axe optique du premier faisceau laser et à l'axe optique du second faisceau laser.

7. Appareil de traitement au laser (1) conformément à la revendication 6, dans lequel le premier élément optique comprend un premier miroir (21 a) et un deuxième miroir (21 b) positionnés de manière à réfléchir le premier faisceau laser dans une direction en regard de la direction de propagation du premier faisceau laser vers l'instrument de mesure (25) ; et
dans lequel le second élément optique comprend un troisième miroir (22a) et un quatrième miroir (22b) adaptés pour réfléchir le second faisceau laser dans une direction en regard de la direction de propagation du second faisceau laser vers l'instrument de mesure (25).

8. Appareil de traitement au laser (1) conformément à la revendication 1, dans lequel la section d'observation (70) comprend une caméra à dispositif de couplage de charge (CCD) (74).

9. Appareil de traitement au laser (1) conformément à l'une quelconque des revendications précédentes, dans lequel l'élément de formation de chemin optique (30) comprend un miroir (31) et un miroir semi-réfléchissant (32),
dans lequel le miroir (31) est adapté pour réfléchir l'un d'entre des premier et second faisceaux laser vers le miroir semi-réfléchissant (32) ; et
dans lequel le miroir semi-réfléchissant (32) est adapté pour réfléchir au moins une partie de l'un d'entre les premier et second faisceaux laser dans la direction de l'axe optique commun et pour transmettre au moins une partie de l'autre d'entre les premier et second faisceaux laser.

10. Appareil de traitement au laser (1) conformément à la revendication 9, dans lequel l'axe optique commun et l'axe optique de l'autre des premier et second faisceaux laser sont concurrents.

11. Appareil de traitement au laser (1) conformément à la revendication 9 ou 10, dans lequel le miroir semi-réfléchissant (32) est un miroir à sélection de longueur d'onde adapté pour réfléchir le rayonnement électromagnétique comprenant la longueur d'onde de l'un des premier et second faisceaux laser et pour transmettre la longueur d'onde de l'autre des premier et second faisceaux laser.

12. Appareil de traitement au laser (1) conformément à l'une quelconque des revendications précédentes, dans lequel la fente (40) comprend un premier ensemble d'éléments de fente (40A, 40B) qui sont disposés en regard l'un de l'autre et un second ensemble d'éléments de fente (40C, 40D) disposés en regard l'un de l'autre, le premier ensemble d'éléments de fente (40A, 40B) définissant une largeur de fente dans une première direction et le second ensemble d'éléments de fente (40C, 40D) définissant une largeur de fente dans une seconde direction.

13. Appareil de traitement au laser (1) conformément à la revendication 12, dans lequel un espace entre le premier ensemble d'éléments de fente (40A, 40B) et/ou un espace entre le second ensemble d'éléments de fente (40C, 40D) est réglable.

14. Appareil de traitement au laser (1) conformément à l'une quelconque des revendications précédentes, dans lequel la pluralité de lentilles de focalisation (62) est montée à un intervalle prédéfini le long d'une direction perpendiculaire à la direction de l'axe optique commun, et dans lequel la section de commutation de lentille de focalisation (61) est adaptée pour entraîner linéairement la pluralité de lentilles de focalisation (62) dans ladite direction.
